# EUROPEAN PATENT APPLICATION

(11) **EP 4 456 293 A1**
(43) Date of publication of application: **30.10.2024**
(21) Application number: 23898368.8
(22) Date of filing: 01.12.2023
(51) Int. Cl.: H01M 50/244, H01M 50/264

(54) **TRANSFER DEVICE, AND METHOD FOR PROVIDING BATTERY PACK BY USING SAME**

(30) Priority: 02.12.2022 KR 20220166586; 07.03.2023 KR 20230029842
(71) Applicant: LG Energy Solution, Ltd., Seoul 07335 (KR)
(72) Inventor: JEON, Jong Pil, Daejeon 34122 (KR); KIM, Min Bum, Daejeon 34122 (KR); SHIN, Ju Hwan, Daejeon 34122 (KR); SEONG, Jun Yeob, Daejeon 34122 (KR); LEE, Hyoung Suk, Daejeon 34122 (KR)
(74) Representative: Plasseraud IP
(86) International application number: PCT/KR2023/019649
(87) International publication number: WO 2024/117845

(57) **Abstract**

Discussed is a transfer device for a battery cell assembly. The transfer device may include a jig plate including an opening in a central area of the jig plate, first cross-beam fasteners on the jig plate and configured to be coupled to a first cross-beam of a battery cell assembly, second cross-beam fasteners configured to be coupled to a second cross-beam of the battery cell assembly, and first and second film fasteners on the jig plate and adjacent to the opening of the jig plate.

## Description

### [Technical Field]

The present invention relates to a transfer device and a method of providing a battery pack using the same.

The present application claims the benefit of priority based on Korean Patent Application No. 10-2022-0166586, filed on December 2, 2022 and Korean Patent Application No. 10-2023-0029842, filed on March 7, 2023, and the entire contents of these Korean patent applications are incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

One of powerful solutions to increase the energy density of a secondary battery is a moduleless type battery pack (or a cell-to-pack structure). Because a module covering battery cells is omitted in the moduleless type battery pack, the mass of the battery pack may decrease significantly.

### [Disclosure]

### [Technical Problem]

The present invention is directed to providing a transfer device with improved reliability and a method of providing a battery pack using the same.

### [Technical Solution]

Example embodiments provide a transfer device.

The transfer device includes a jig plate including an opening in a central area of the jig plate, first cross-beam fasteners on the jig plate and configured to be coupled to a first cross-beam of a battery cell assembly, second cross-beam fasteners configured to be coupled to a second cross-beam of the battery cell assembly, and first and second film fasteners on the jig plate and adjacent to the opening of the jig plate.

The first and second film fasteners may be configured to fix a lifting film, and the lifting film may be configured to support a central area of the cell stack of the battery cell assembly.

The first and second film fasteners may be configured to fix opposite ends of the lifting film.

The lifting film may be coupled to the first and second film fasteners through the opening of the jig plate.

A width of the lifting film may be in a range of 50 mm to 100 mm.

Each of the first and second film fasteners may include a clamp configured to press the lifting film, and first and second pressure handles configured to press the clamp.

The clamp may be configured to rotate about the first pressure handle as an axis.

The clamp may be configured to be separated from the second pressure handle.

Example embodiments provide a method of providing a battery pack.

The method includes providing a battery cell assembly including a cell stack and a lifting film coupled to the battery cell assembly, and disposing the battery cell assembly on a housing using the lifting film, in which the cell stack includes a plurality of first battery cells on a central area of the battery cell assembly and a plurality of second battery cells at edges of the battery cell assembly, and the plurality of first battery cells are supported by the lifting film.

The battery cell assembly may include an adhesive material attached to each of the plurality of first battery cells.

The adhesive material may be spaced apart from the lifting film.

The battery cell assembly may include a first separator and a second separator that are in contact with the plurality of first battery cells.

The lifting film may include a first part supporting parts of the plurality of first battery cells, a second part interposed between the first separator and the plurality of first battery cells, and a third part interposed between the second separator and the plurality of second battery cells.

The method may further include loading the battery cell assembly into a transfer device.

The transfer device may include film fasteners configured to fix the lifting film.

The method may further include removing the lifting film from the battery cell assembly.

The lifting film may be removed by pulling one end of the lifting film.

### [Advantageous Effects]

According to example embodiments of the present invention, a battery cell assembly is transferred by a lifting film supporting battery cells on a central area and a transfer device and mounted on a housing of a battery pack. The transfer device is configured to fix the lifting film and the battery cell assembly. The lifting film may prevent battery cells on the central area from sagging. After the battery cell assembly is mounted in a housing, the lifting film can be simply removed from the battery cell assembly by pulling one end of the lifting film.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a flowchart of a method of providing a battery pack according to example embodiments.
FIG. 2 is a perspective view for describing a method of providing a battery pack according to example embodiments.
FIG. 3 is a cross-sectional view taken along line 2I-2I' of FIG. 2.
FIG. 4 is a perspective view including a cross section taken along line 2II-2II' of FIG. 2.
FIG. 5 is a perspective view for describing a method of providing a battery pack according to example embodiments.
FIG. 6 is a cross-sectional view taken along line 5I-5I' of FIG. 5.
FIGS. 7 and 8 are perspective views for describing a method of providing a battery pack according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

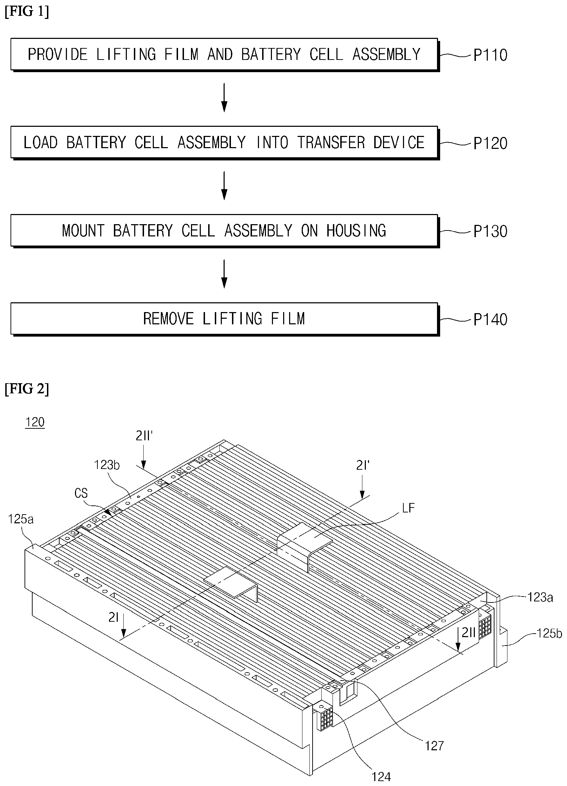

FIG. 1 is a flowchart of a method of providing a battery pack according to example embodiments.

FIG. 2 is a perspective view for describing a method of providing a battery pack according to example embodiments.

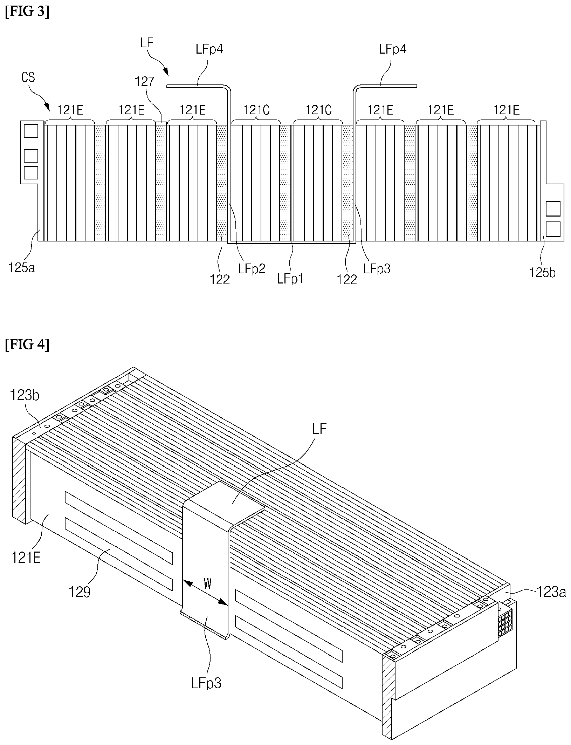

FIG. 3 is a cross-sectional view taken along line 2I-2I' of FIG. 2.

FIG. 4 is a perspective view including a cross section taken along line 2II-2II' of FIG. 2.

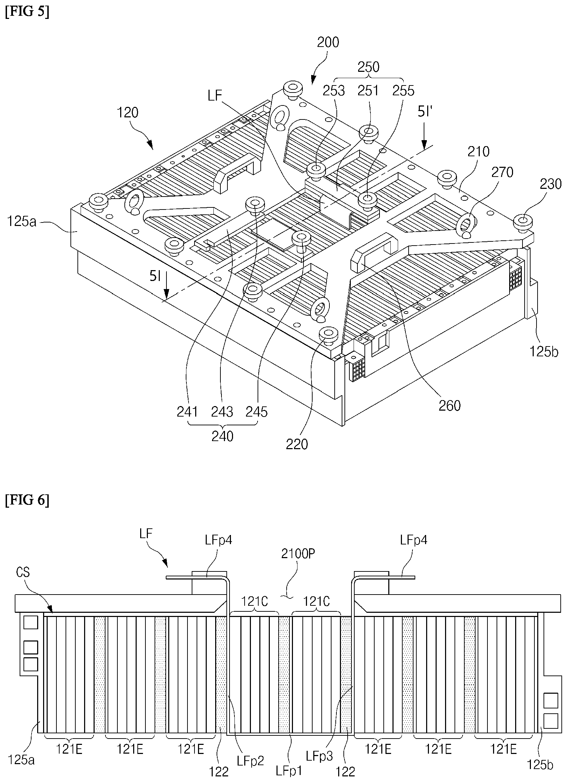

FIG. 5 is a perspective view for describing a method of providing a battery pack according to example embodiments.

FIG. 6 is a cross-sectional view taken along line 5I-5I' of FIG. 5.

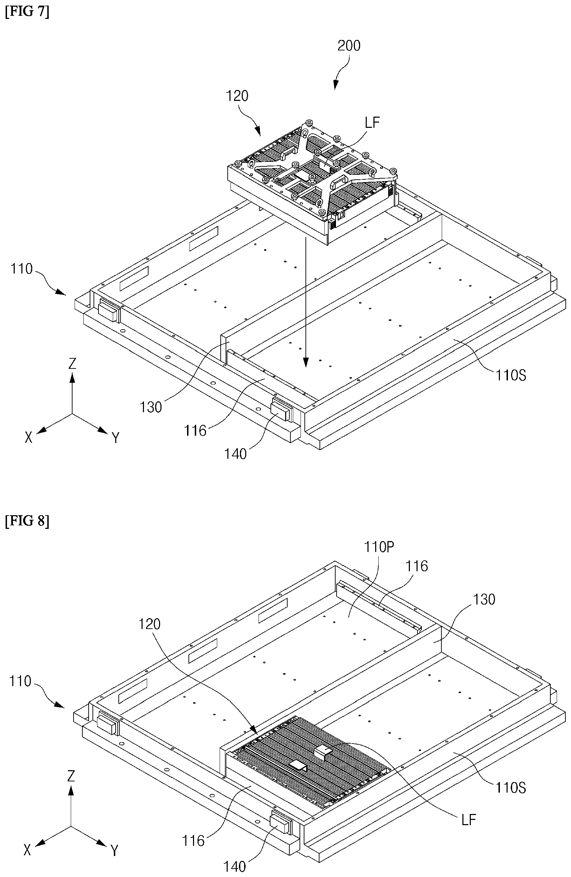

FIGS. 7 and 8 are perspective views for describing a method of providing a battery pack according to example embodiments.

Referring to FIGS. 1 to 4, in P110, a lifting film LF and a battery cell assembly 120 may be provided.

The battery cell assembly 120 may further include a cell stack CS, a first bus bar assembly 123a, a second bus bar assembly 123b, a first cross-beam 125a, a second cross-beam 125b, and a flat flexible cable (FFC) assembly 127. According to example embodiments, the battery cell assembly 120 may not include a module frame.

The cell stack CS may include a plurality of first battery cells 121C, a plurality of second battery cells 121E, and a plurality of separators 122. The plurality of first battery cells 121C may be disposed on a central area of the cell stack CS. The plurality of second battery cells 121E may be disposed on edges of the cell stack CS. The plurality of first battery cells 121C may be interposed between the plurality of second battery cells 121E. The plurality of first battery cells 121C and the plurality of second battery cells 121E are substantially the same except for positions thereof in the cell stack CS.

According to example embodiments, each of the plurality of first battery cells 121C and the plurality of second battery cells 121E may be a bidirectional pouch type cell. That is, each of positive electrode leads of the plurality of first battery cells 121C and the plurality of second battery cells 121E may be disposed at one end of the first or second battery cells 121C and 121E, and each of negative electrode leads of the plurality of first battery cells 121C and the plurality of second battery cells 121E may be disposed at another end thereof. Those of ordinary skill in the art will be able to easily derive an embodiment in which the plurality of first battery cells 121C and the plurality of second battery cells 121E are monodirectional pouch type cell, cylindrical battery cells or prismatic battery cells, based on the above description.

Each of the plurality of first battery cells 121C and the plurality of second battery cells 121E includes an electrode assembly, an electrolyte, and a pouch case covering them. The pouch case may include an aluminum laminate sheet. The electrode assembly included in the pouch case includes a positive electrode, a negative electrode, and a separator interposed between the positive and negative electrodes. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

According to some embodiments, the second battery cells 121E and the first battery cells 121C that are connected in parallel may form a plurality of banks, and the plurality of banks may be connected in series.

The plurality of separators 122 may be interposed between the first battery cells 121C and the second battery cells 121E, between the first battery cells 121C, and between the second battery cells 121E. The plurality of separators 122 horizontally support the first battery cells 121C and the second battery cells 121E to prevent swelling of the first battery cells 121C and the second battery cells 121E.

According to example embodiments, the plurality of separators 122 may be thermal barriers. According to example embodiments, each of the plurality of separators 122 may have a high melting temperature and a low thermal conductivity. According to example embodiments, each of the plurality of separators 122 may include a flame retardant material such as a ceramic and a coated glass material. According to example embodiments, the plurality of separators 122 may be configured to emit a fire retarding material and a fire extinguishing agent when a thermal runaway event occurs.

As described above, the first and second bus bar assemblies 123a and 123b may cover a positive electrode lead and a negative electrode lead of each of the first battery cells 121C and the second battery cells 121E. The first bus bar assembly 123a may include bus bars 124 that are external connection terminals. A resultant voltage based on an electrical connection of the cell stack CS may be output through the bus bars 124. Each of the first and second bus bar assemblies 123a and 123b may include an integrated circuit for sensing at least one of the positive electrode lead and the negative electrode lead of each of the first battery cells 121C and the second battery cells 121E.

The first bus bar assembly 123a and the second bus bar assembly 123b may be connected to each other by the FFC assembly 127. The FFC assembly 127 may be disposed on the cell stack 121. The FFC assembly 127 may be a passage for transmitting a measurement value at each of certain nodes of the cell stack CS sensed by the second bus bar assembly 123b.

The first cross-beam 125a and the second cross-beam 125b may be spaced apart from each other with the cell stack CS interposed therebetween. The first cross-beam 125a and the second cross-beam 125b may cover the cell stack CS. The first cross-beam 125a and the second cross-beam 125b may be fixed to the cell stack CS by an adhesive material or the like.

According to example embodiments, the first cross-beam 125a and the second cross-beam 125b may have different and complementary shapes. Accordingly, when the battery cell assembly 120 is mounted in a housing of the battery pack, the second cross-beam 125b of the battery cell assembly 120 may be coupled to a first cross-0beam 125a of a subsequent battery cell assembly 120.

The lifting film LF may pass through the cell stack CS. The lifting film LF may support an intermediate part of the cell stack CS. The lifting film LF may include a flexible material such as polyethylene terephthalate (PET ) or polycarbonate (PC). A width W of the lifting film LF may be in a range of about 50 mm to about 100 mm.

According to example embodiments, the lifting film LF may include a first part LFp1 below the plurality of first battery cells 121C, a second part LFp2 between the plurality of first battery cells 121C and the separator 122, a third part LFp3 between the plurality of second battery cells 121E and the separator 122, and fourth parts LFp4 exposed above the cell stack CS.

Here, the terms "above" "below" defining positions with respect to the cell stack CS are relative concepts and thus may be defined with respect to the bus bars 124. With respect to the center of the cell stack CS, an upper part of the cell stack CS may be closer to the bus bars 124 than a lower part of the cell stack CS. Accordingly, the fourth parts LFp4 of the lifting film LF may be closer to the bus bars 124 than the first part LFp1 of the lifting film LF.

The first part LFp1 of the lifting film LF may support the plurality of first battery cells 121C. The first part LFp1 of the lifting film LF may be in contact with lower parts of the plurality of first battery cells 121C.

The battery cell assembly 120 that does not include a frame includes a large number of first and second battery cells 121C and 121E to maximize energy density. Thus, a plurality of first battery cells 121C on a central area of the cell stack CS may sag during the mounting of the battery cell assembly 120 on the battery pack. When the first battery cells 121C sag, the positive and negative electrode leads of the plurality of first battery cells 121C may be damaged, thus significantly reducing manufacturing yield of a battery pack.

The lifting film LF may be provided to form the cell stack CS when the plurality of first battery cells 121C, the plurality of second battery cells 121E, and the plurality of separators 122 are coupled to one another. Accordingly, the lifting film LF may pass through the cell stack CS. More specifically, the lifting film LF may penetrate between the separator 122 and the first battery cell 121C and between the separator 122 and the second battery cell 121E. A separator relatively close to the first cross-beam 125a among the separators 122 in contact with the lifting film LF may be referred to as a first separator. A separator relatively close to the second cross-beam 125b among the separators 122 in contact with the lifting film LF may be referred to as a second separator.

The plurality of first battery cells 121C, the plurality of second battery cells 121E, and the plurality of separators 122 may be coupled to one another by an adhesive material 129 such as a double-sided tape. The adhesive material 129 may be applied to the plurality of first battery cells 121C, the plurality of second battery cells 121E, and the plurality of separators 122 while avoiding a position on the cell stack CS that the lifting film LF penetrates. More specifically, as shown in FIG. 4, the third part LFp3 of the lifting film LF may be in contact with central portion of the second battery cells 121E, and the adhesive material 129 may be spaced apart from the central portion of the second battery cells 121E. Accordingly, the lifting film LF may be easily removed after the transfer of the battery cell assembly 120. A relationship between the adhesive material 129 and the second part LFp2 of the lifting film LF is similar to a relationship between the adhesive material 129 and the third part LFp3 of the lifting film LF.

### (Second Embodiment)

Next, referring to FIGS. 1, 5, and 6, in P120, the battery cell assembly 120 may be loaded into a transfer device 200.

The transfer device 200 may include a jig plate 210, first cross-beam fasteners 220, second cross-beam fasteners 230, a first film fastener 240, a second film fastener 250, a lifting handle 260, and a lifting ring 270.

The jig plate 210 may have a roughly flat plate shape. The jig plate 210 may include an opening 210OP. The opening 210OP may be positioned in the central area of the jig plate 210.

The first cross-beam fasteners 220 and the second cross-beam fasteners 230 may be disposed on the jig plate 210. The first cross-beam fasteners 220 and the second cross-beam fasteners 230 may be disposed at edges of the jig plate 210. The first cross-beam fasteners 220 may be configured to fix the first cross-beam 125a. The second cross-beam fasteners 230 may be configured to fix the second cross-beam 125b. Each of the first and second cross-beam fasteners 220 and 230 may include a handle coupled to a body formed with a screw thread. The body of each of the first and second cross-beam fasteners 220 and 230 may be fixed to the first cross-beam 125a and the second cross-beam 125b by manipulating the handle of each of the first and second cross-beam fasteners 220 and 230.

The first film fastener 240 and the second film fastener 250 may be on the jig plate 210. The first film fastener 240 and the second film fastener 250 may be adjacent to the opening 210OP of the jig plate 210. The lifting film LF may be coupled to the first and second film fasteners 240 and 250 through the opening 210OP. The first film fastener 240 may be configured to fix one end of the lifting film LF. The second film fastener 250 may be configured to fix another end of the lifting film LF.

The first film fastener 240 may include a clamp 241, a first pressure handle 243, and a second pressure handle 245. The clamp 241 may have a rod shape. The clamp 241 may be configured to press the lifting film LF. The first and second pressure handles 243 and 245 may be configured to press the clamp 241. The clamp 241 may rotate about the first pressure handle 243 as an axis in a loose state (i.e., a state in which the clamp 241 is not pressed by the first and second pressure handles 243 and 245). As the clamp 241 rotates, the clamp 241 may be coupled to or separated from the second pressure handle 245.

The second film fastener 250 may include a clamp 251, a first pressure handle 253, and a second pressure handle 255. The clamp 251 may have a rod shape. The clamp 251 may be configured to press the lifting film LF. The first and second pressure handles 253 and 255 may be configured to press the clamp 251. The clamp 251 may rotate about the first pressure handle 253 as an axis in a loose state (i.e., a state in which the clamp 251 is not pressed by the first and second pressure handles 253 and 255). As the clamp 251 rotates, the clamp 251 may be coupled to or separated from the second pressure handle 255.

After the lifting film LF is loaded on the first and second film fasteners 240 and 250, the first and second film fasteners 240 and 250 may fix the lifting film LF by tightening the first and second pressure handles 243, 245, 253, and 255. To unload the lifting film LF, the lifting film LF may be separated from the first and second film fasteners 240 and 250 by loosening the first and second pressure handles 243, 245, 253, and 255.

The lifting handle 260 may be used to move the transfer device 200 by an operator. The lifting ring 270 may be used to move the transfer apparatus 200 by a lifting device such as a hoist.

### (First Embodiment)

Next, referring to FIGS. 1 and 7, in P130, the battery cell assembly 120 may be mounted on the housing 110.

The transfer device 200 coupled to the battery cell assembly 120 may be pick up and placed on a desired position on the housing 110 by a lifting device. As described above, the central area of the cell stack CS (see FIG. 3) of the battery cell assembly 120 is supported by the lifting film LF, thereby preventing sagging of the cell stack CS (see FIG. 3).

The housing 110 may include a flat plate part 110P, side walls 110S surrounding the plate part 110P, and a support 116 on the plate part 110P. Before the battery cell assembly 120 is mounted, a center beam 130 that partitions an inner space of the housing 110 and an exhaust device 140 coupled to the side walls 110S may be further provided.

The first cross-beam 125a of the battery cell assembly 120 may be coupled to the support 116 of the housing 110 or a second cross-beam 125b of another battery cell assembly 120 that has been already mounted.

Thereafter, referring to FIGS. 1 and 8, in P140, the lifting film LF may be removed. Before the lifting film LF is removed, the battery cell assembly 120 may be unloaded from the transfer device 200 (see FIG. 7). According to example embodiments, the lifting film LF may be removed by pulling one end of the lifting film LF.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A transfer device comprising:
a jig plate including an opening in a central area of the jig plate;
first cross-beam fasteners on the jig plate and configured to be coupled to a first cross-beam of a battery cell assembly;
second cross-beam fasteners configured to be coupled to a second cross-beam of the battery cell assembly; and
a first film fastener and a second film fastener on the jig plate and adjacent to the opening of the jig plate.

2. The transfer device of claim 1, wherein the first and second film fasteners are configured to fix a lifting film, and
wherein the lifting film is configured to support a central area of the cell stack of the battery cell assembly.

3. The transfer device of claim 2, wherein the first and second film fasteners are configured to fix opposite ends of the lifting film.

4. The transfer device of claim 2, wherein the lifting film is coupled to the first and second film fasteners through the opening of the jig plate.

5. The transfer device of claim 2, wherein a width of the lifting film is in a range of approximately 50 mm to 100 mm.

6. The transfer device of claim 2, wherein each of the first and second film fasteners comprises:
a clamp configured to press the lifting film; and
first and second pressure handles configured to press the clamp.

7. The transfer device of claim 6, wherein the clamp is configured to rotate about the first pressure handle as an axis.

8. The transfer device of claim 6, wherein the clamp is configured to be separated from the second pressure handle.

9. A method of providing a battery pack, the method comprising:
providing a battery cell assembly including a cell stack and a lifting film coupled to the battery cell assembly; and
disposing the battery cell assembly on a housing using the lifting film,
wherein the cell stack comprises a plurality of first battery cells on a central area of the battery cell assembly and a plurality of second battery cells at edges of the battery cell assembly, and
wherein the lifting film supports the plurality of first battery cells.

10. The method of claim 9, wherein the battery cell assembly comprises an adhesive material attached to each of the plurality of first battery cells, and
wherein the adhesive material is spaced apart from the lifting film.

11. The method of claim 10, wherein the battery cell assembly comprises a first separator and a second separator which are in contact with the plurality of first battery cells, and
wherein the lifting film comprises:
a first part supporting parts of the plurality of first battery cells;
a second part interposed between the first separator and the plurality of first battery cells; and
a third part interposed between the second separator and the plurality of second battery cells.

12. The method of claim 9, further comprising loading the battery cell assembly into a transfer device,
wherein the transfer device comprises film fasteners configured to fix the lifting film.

13. The method of claim 9, further comprising removing the lifting film from the battery cell assembly.

14. The method of claim 13, wherein the lifting film is removed by pulling one end of the lifting film.
